Europäisches Patentamt

European Patent Office

Office européen des brevets

(11) EP 0 586 288 B1

(19)

(12) # FASCICULE DE BREVET EUROPEEN

(45) Date de publication et mention
de la délivrance du brevet:
**14.05.1997 Bulletin 1997/20**

(51) Int Cl.$^6$: **G01H 1/00**, G01B 11/16

(21) Numéro de dépôt: **93402098.3**

(22) Date de dépôt: **26.08.1993**

(54) **Procédé et dispositif de mesure de vibrations d'aubes de turbine en fonctionnement**

Verfahren und Vorrichtung zur Vibrationsmessung einer Turbinenschaufel während des Betriebes

Method and device for measuring the vibrations of operating turbine blades

(84) Etats contractants désignés:
**AT CH DE GB IT LI SE**

(30) Priorité: **03.09.1992 FR 9210536**

(43) Date de publication de la demande:
**09.03.1994 Bulletin 1994/10**

(73) Titulaire: **SOCIETE EUROPEENNE DE PROPULSION**
**92150 Suresnes (FR)**

(72) Inventeurs:
• **Clement, Michel**
**F-27200 Vernon (FR)**
• **Rouhet, Jacky**
**F-27950 St Marcel (FR)**

(74) Mandataire: **Thévenet, Jean-Bruno et al**
**Cabinet Beau de Loménie**
**158, rue de l'Université**
**75340 Paris Cédex 07 (FR)**

(56) Documents cités:
**EP-A- 0 320 122          US-A- 4 080 823**
**US-A- 4 573 358**

• **BROWN BOVERI REVIEW, vol. 64, no. 1, janvier 1977, Baden CH, pages 64-67; H. ROTH : "Measuring vibration on turbine blades by optical means"**
• **MESURES REGULATION AUTOMATISME, vol. 43, no. 6/7, juillet 1978, Paris FR, pages 21-22 : "Une mesure optique des amplitudes de vibration très faibles"**

EP 0 586 288 B1

## Description

La présente invention concerne un procédé de mesure optique de vibration d'aubes de turbine quelles qu'en soient la forme et la dimension, la turbine étant en fonctionnement. Ce procédé peut être mis en application au niveau de tous les types de turbines, turbines à gaz ou turbines hydrauliques par exemple.

La présente invention se rapporte également au dispositif pour la mise en oeuvre de ce procédé de mesure optique sans contact.

<u>Art antérieur</u>

Il est connu par l'article de Anatole P. KURKOV intitulé "optical Measurement of Unducted Fan Blade Detections" publié dans le journal de "The american society of mechanical engineers" (Ref : 89-GT-298) un dispositif de mesure optique des déplacements de pales d'hélices de propulseurs mettant en oeuvre une source laser, le principe de mesure des déplacements reposant sur l'occultation, par les pales de l'hélice, du faisceau lumineux issu de la source laser.

Il est connu également par le brevet US-A-4 573 358 un dispositif de mesure de vibration tangentielle d'aubes de turbines se déplaçant à une vitesse déterminée. Dans ce dispositif, plusieurs détecteurs sont disposés sur la périphérie de la turbine, chaque détecteur générant un signal au passage de chaque aube.

Cette méthode de mesure présente de nombreux inconvénients et notamment celui de ne pas permettre la détermination de l'ensemble des paramètres caractéristiques de la vibration de la pale que sont son amplitude, sa fréquence et sa phase, mais seulement de l'un d'entre eux, son amplitude. En outre, une telle méthode ne permet d'avoir accès qu'à une valeur moyenne du déplacement, calculée à partir des mesures sur toutes les pales et sur plusieurs tours.

Par ailleurs, l'utilisation d'une source laser, par l'encombrement qu'il implique, ne permet pas une miniaturisation du système de mesure qui, dans le cas de turbines de faibles dimensions et à l'accessibilité difficile telles que des turbines de turbopompes de faible puissance par exemple, peut se révéler indispensable.

La présente invention a pour but de proposer un procédé qui permette une détermination instantanée, en temps réel, de l'ensemble des composantes de la vibration de l'aube. Elle a pour but également de réaliser un dispositif de mesure optique simple et fiable, de dimesions particulièrement réduites, adaptable à tous types de turbines et insensible aux milieux ambiants.

Ces buts sont atteints par un procédé de mesure optique de vibrations, notamment d'aubes de turbine en rotation, ces aubes étant montées sur un moyeu solidaire de l'arbre de la roue de turbine se déplaçant avec une vitesse de rotation constante déterminée et ces aubes comportant chacune au moins un flanc disposé dans un plan parallèle au plan médian du moyeu et un dessus disposé dans un plan parallèle au plan tangent du moyeu, caractérisé en ce qu'il comporte les étapes suivantes :

- génération de trois signaux de référence à partir de la détection du passage d'un marquage, réalisé sur le moyeu de la roue de turbine, par un détecteur optique,
- détection de trois signaux de mesure au passage d'un autre marquage, réalisé sur au moins l'une quelconque des parties de l'aube, devant un autre détecteur optique, l'aube étant en oscillation,
- détermination des décalages temporels existant entre chacun des signaux de référence et chacun des signaux de mesure, ces décalages étant, en l'absence d'oscillations de l'aube, nuls ou égaux à des valeurs constantes déterminées, et
- calcul instantané des composantes de vibration de l'aube en amplitude, fréquence et phase à partir des différents décalages relevés.

Les signaux générés à chaque tour permettent le calcul de trois valeurs instantanées du déplacement de l'aube (décalages temporels) dû à la vibration de résonance de celle-ci dans l'un des modes de vibration naturelle de l'aube, c'est-à-dire le mode de vibration tangentiel, le mode transversal ou le mode de torsion. Ces trois valeurs permettent ensuite, par la résolution d'un système de trois équations à trois inconnues, le calcul des trois composantes caractéristiques de cette vibration, à savoir : son amplitude, sa fréquence et sa phase.

Pour la détermination des composantes de la vibration tangentielle, le marquage peut être réalisé sur le flanc de l'aube sous la forme de trois marques équidistantes disposées radialement, et le détecteur est un capteur unique placé perpendiculairement au plan du moyeu en avant des aubes.

Ce marquage peut aussi être réalisé simplement par le bord de l'aube, le détecteur étant alors constitué de trois capteurs équidistants disposés en avant des aubes perpendiculairement au plan du moyeu.

Pour la détermination des composantes de la vibration transversale, le marquage est réalisé sur le dessus de l'aube sous la forme de trois marques parallèles disposées obliquement par rapport à l'axe de la roue, et le détecteur est un capteur unique radial disposé dans le plan médian de la roue au dessus de l'aube.

Selon une autre réalisation, ce marquage est réalisé sur le dessus de l'aube sous la forme de trois losanges dont les plus petites diagonales sont disposées dans le plan médian de la roue, et le détecteur est constitué par deux capteurs séparés d'une distance d déterminée et situés de part de d'autre du plan médian de la roue.

Pour la détermination des composantes de la vibration de torsion, le marquage est réalisé sur le dessus de l'aube sous la forme de trois marques parallèles disposées parallèlement à l'axe de roue, et le détecteur est un capteur unique radial situé à une distance r déterminée du plan médian de la roue.

Selon une autre réalisation, ce marquage peut consister en une marque unique disposée sur le dessus de l'aube parallèlement à l'axe de la roue, et le détecteur est alors constitué par trois capteurs radiaux équidistants situés dans un plan parallèle au plan médian de la roue à une distance r déterminée de celui-ci.

Une détermination simultanée des modes transversal et de torsion est possible en adoptant une configuration telle que le marquage est réalisé sur le dessus de l'aube sous la forme de trois triangles isocèles dont les bases sont disposées parallèlement à l'axe de la roue, et le détecteur est constitué par deux capteurs séparés d'une distance d déterminée et situés de part et d'autre du plan médian de la roue.

La mesure des vibrations de toutes les aubes d'une turbine est possible avec une analyse de l'ensemble des aubes en un tour de roue ou une analyse d'une aube nouvelle à chaque tour.

Afin de compléter les informations disponibles sur ces vibrations, une analyse de Fourier peut être réalisée en différé pour déterminer le spectre de ces vibrations. De même, afin d'augmenter la précision des mesures relevées, une détermination des déplacements axiaux de la roue peut être effectuée en relevant les variations de l'amplitude des signaux de référence par rapport à une amplitude initiale déterminée.

Le dispositif pour la mise en oeuvre de ce procédé comporte :

- un premier système de mesure pour la génération de trois signaux de référence à partir de la détection, par un premier détecteur, du passage d'un premier marquage réalisé sur le moyeu de la roue de turbine,
- un deuxième système de mesure pour la détection de trois signaux de mesure au passage d'un second marquage, réalisé sur le flanc de l'aube, devant un second détecteur, l'aube étant en oscillation.

Dans cette configuration, seules les vibrations tangentielles peuvent être mesurées. Pour la mesure des vibrations transversales et de torsion il est nécessaire de rajouter un troisième puis un quatrième systèmes de mesure analogues au second système de mesure, mais placés sur le dessus de l'aube.

Toutefois, dans une réalisation particulière, trois systèmes de mesure sont suffisants pour mesurer l'ensemble des modes de vibration, le troisième système de mesure étant alors tel que le marquage est constitué de trois marques en forme de triangles isocèles dont les bases sont parallèles à l'axe de la roue et ledit troisième détecteur est constitué de deux capteurs radiaux situés au dessus de l'aube, de part et d'autre du plan médian de la roue et séparés par une distance d déterminée.

En pratique, la détection du passage d'un marquage est réalisée par l'occultation ou la réflexion d'un faisceau lumineux issu d'une source et aboutissant au détecteur optique.

Selon une réalisation particulière, la source et le détecteur sont déportés du lieu de mesure au moyen d'une fibre optique unique, un séparateur de faisceaux assurant un aiguillage à l'émission et à la réception.

Les signaux optiques fournis par les détecteurs sont transformés en signaux numériques dans un module d'acquisition opto-électronique et un module de traitement de signal en retire les paramètres de la vibration. Le module d'acquisition comporte des modules d'alimentation et de réception pour générer le faisceau lumineux de mesure et recevoir le faisceau réfléchi ou transmis et des modules de mise en forme des signaux numériques issus des signaux optiques.

Le module de traitement de signal comporte un module pour la détermination de la vitesse de rotation de la roue de turbine à partir des signaux de référence reçus par le module d'acquisition, un circuit de recalage temporel pour prendre en compte les décalages initiaux existant au niveau des systèmes de mesure, et une unité de calcul en temps réel qui, à partir des décalages temporels mesurés, fournis par le module d'acquisition, et recalés, calcule les paramètres de la vibration que sont son amplitude, sa fréquence et sa phase dans chaque mode.

D'autres caractéristiques et avantages de la présente invention ressortiront mieux à la lecture de la description qui va suivre faite, à titre indicatif et non limitatif, en regard des dessins annexés sur lesquels :

- la figure 1 montre les trois modes possibles de vibration d'une aube,
- la figure 2 est un schéma d'implantation du dispositif de mesure optique de vibration selon l'invention,
- la figure 3 montre la chaîne de mesure optoélectronique du dispositif de la figure 2,
- la figure 4 montre certains des signaux reçus par le module d'acquisition,
- la figure 5 est un schéma explicatif de la détermination du déplacement tangentiel d'une aube,
- la figure 6 est un exemple de disposition du système de mesure de la vibration transversale,
- la figure 7 est un exemple de disposition du système de mesure de la vibration de torsion,
- la figure 8 est un exemple de disposition du système de mesure simultanée des vibrations transversale et de torsion,

- les figures 9a à 9c montrent un autre exemple de réalisation du système de mesure de la vibration de torsion,
- les figures 10a à 10c montrent un autre exemple de réalisation du système de mesure de la vibration transversale,
- les figures 11a à 11c montrent un autre exemple de réalisation du système de mesure simultanée des vibrations transversale et de torsion,
- les figures 12a à 12g représentent différentes configurations du détecteur optique,
- la figure 13 est une vue de détail de l'action du faisceau lumineux sur une face de l'aube, et
- la figure 14 montre la transformation de l'impact du faisceau lumineux sur l'aube par l'utilisation d'une lentille de focalisation.

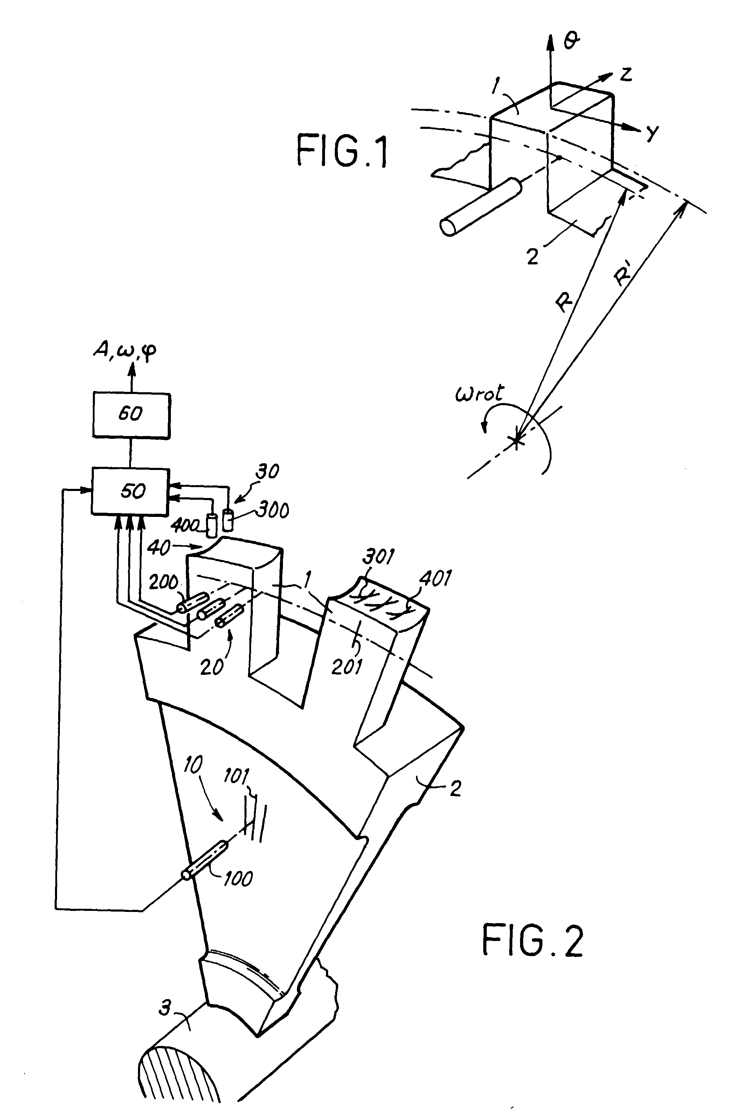

La figure 1 représente une aube de turbine sur laquelle les différents modes de vibration de l'aube ont été matérialisés.

L'aube 1 est une sorte de lame qui peut vibrer à une fréquence propre qui dépend de sa forme, de ses dimensions et de son mode de fixation sur le moyeu 2. Il peut être distingué trois modes de vibration de cette aube : un mode de vibration tangentiel (selon l'axe référencé y), un mode de vibration transversal (selon l'axe référencé z) et un mode de vibration de torsion (selon l'axe référence θ).

La vibration de l'aube dans chacun de ces modes est caractérisée par sa fréquence, son amplitude et sa phase, paramètres qu'il importe de bien connaître afin d'évaluer le plus précisément possible les risques de rupture de l'aube et donc d'éviter cette rupture, préjudiciable pour la turbine, mais aussi pour l'appareil dans lequel cette dernière est incorporée.

Si l'on considère que les trois modes précités interviennent simultanément, le déplacement de l'aube résultant de cette vibration combinée est alors donné par les équations générales suivantes :

$$y = A_y \cos\left[\ \omega_y\ \left[t + \frac{KAz}{\omega_{rot}\,R}\cos\left[\omega_z\ t + \varphi_z\right]\right.\right.$$
$$\left.\left. + \frac{\varepsilon A\theta}{\omega_{rot}R}\cos\ \left[\omega_\theta t + \varphi_\theta\right]\right] + \varphi_y\right]$$

$$z = Az\ \cos\left[\ \omega z\ \left[t + \frac{Ay}{\omega_{rot}\ R'}\cos\left[\omega_y\ t +\ \varphi_y\right]\right] + \varphi_z\right]$$

$$\theta = A_\theta\ \cos\left[\ \omega\theta\ \left[t + \frac{Ay}{\omega_{rot}\ R'}\cos\left[\omega_y\ t +\ \varphi_y\right]\right] + \varphi\theta\right]$$

dans lesquelles :

$\omega_{rot}$ est la vitesse de rotation angulaire du moyeu
R est le rayon de la trace du point de mesure de la flexion selon l'axe y
R' le rayon du bord de l'aube
Ay, Az, Aθ les amplitudes des vibrations selon respectivement les axes y, z et θ
ωy, ωz, ωθ les amplitudes des vibrations selon respectivement les axes y, z et θ
φy, φz, φθ, les phases des vibrations selon respectivement les axes y, z et θ
K et ε les coefficients de couplage entre modes.

En fait, pratiquement, les trois modes ne sont pas simultanément excités, de sorte que les modes n'interfèrent pas ou peu entre eux. En effet, lorsque l'un des modes entre en résonance, il devient prépondérant et les deux autres modes sont alors difficilement mesurables.

Ainsi, en admettant que le mode de vibration tangentiel est seul excité, les équations précitées se réduisent à (Az et Aθ étant négligeables) :

$$y \simeq Ay\cos\left[\omega_y t + \varphi_y\right]$$

$$z \simeq 0 \qquad \text{pour } \omega_{rot} \qquad (1)$$

$$\theta \simeq 0$$

EP 0 586 288 B1

Si les 2 autres modes z et θ sont faibles mais cependant mesurables, ils obéissent aux 2 équations générales précédentes donnant z et θ dans lesquelles on aura introduit les valeurs $A_y$, $\omega_y$ et $\varphi_y$ calculées à partir de la mesure de la flexion selon y.

Pour une vitesse de rotation du moyeu différente, la résonance pourra se produire pour un mode de vibration différent, par exemple transversal, et les équations générales deviendront alors :

$$y \simeq 0$$

$$= z \simeq Az \cos [\omega zt + \varphi z] \qquad Pour\ \omega_{rot}^{(2)}$$

$$\theta \simeq 0$$

de même pour la résonance dans le mode de torsion de l'aube

$$y \simeq 0$$

$$z \simeq 0 \qquad Pour\ \omega_{rot}^{(3)} = \omega_{rot}^{(2)}$$

$$\theta \simeq A\theta \cos [\omega_\theta\, t + \varphi_\theta]$$

La figure 2 est un schéma d'implantation du dispositif de mesure optique de vibration selon l'invention. Ce dispositif comporte un premier système de mesure 10 destiné à délivrer des signaux de référence générés par un premier détecteur optique 100 au passage d'un marquage de référence 101 relevé sur le moyeu 2 de la roue de turbine. Il comporte également des deuxième 20, troisième 30 et quatrième 40 systèmes de mesure destinés à délivrer respectivement des signaux de mesure de vibration tangentiel, transversal et de torsion générés par des deuxième 200, troisième 300 et quatrième 400 détecteurs optiques au passage des deuxième 201, troisième 301 et quatrième 401 marquages. les signaux de référence et de mesure délivrés par les détecteurs optiques respectifs sont amenés vers un module d'acquisition opto-électronique 50 qui transforme les signaux optiques des détecteurs en signaux numériques manipulables par un module de traitement de signal 60 qui, à partir de ces signaux, détermine en temps réel les paramètres des vibrations dans chacun des modes.

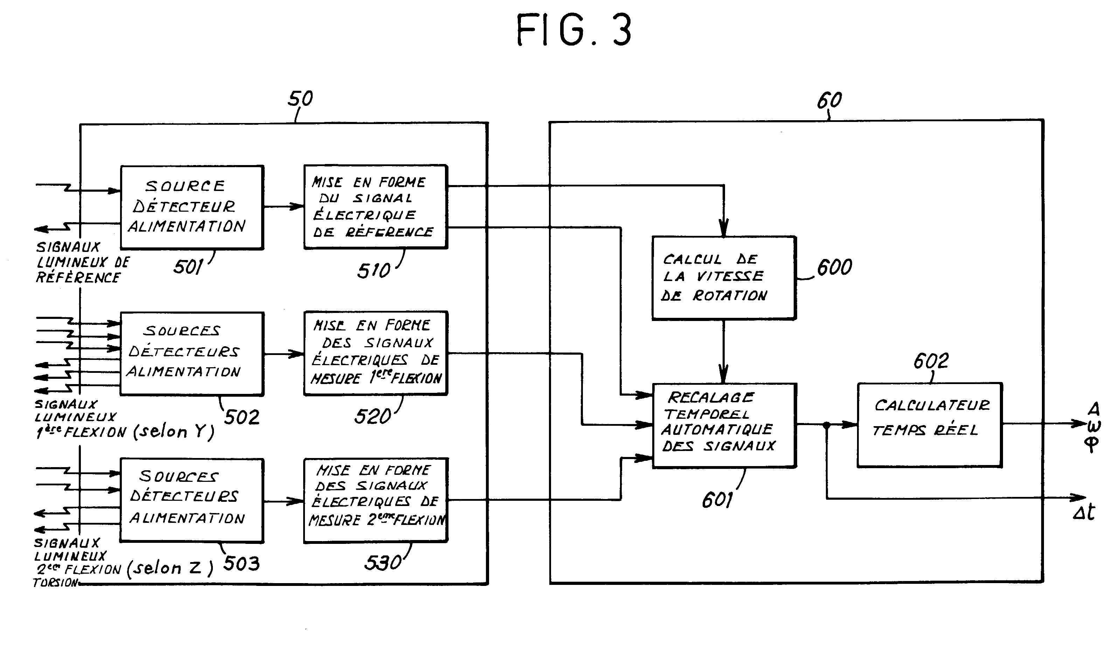

La figure 3 montre plus en détail la structure de la chaîne de mesure opto-électronique. Le module d'acquisition 50 comporte des modules d'alimentation et de réception 501,502,503 qui assurent pour chaque système de mesure à la fois la génération du faisceau lumineux et la réception des signaux optiques émis par les détecteurs.

Des circuits 510, 520, 530 de mise en forme des signaux électriques issus de ces signaux optiques complètent ce module d'acquisition.

Le module de traitement du signal 60 comporte un module 600 pour la détermination de la vitesse de rotation de la roue de turbine à partir des signaux de référence délivrés par le premier système de mesure 10 et reçus par le module d'acquisition 50, un circuit 601 de recalage temporel automatique des signaux de mesure et une unité de calcul en temps réel 602 qui détermine les paramètres vibratoires A, ω, φ caractéristiques du ou des modes de vibration détectés, à partir de décalages temporels fournis par le circuit 50 après recalage éventuel de ceux-ci.

Le circuit de recalage 601 a pour but de prendre en compte les décalages temporels des divers signaux, existant initialement, et dûs notamment aux tolérances de positionnement des différents détecteurs optiques. Ces décalages initiaux sont relevés à vitesse lente, en l'absence de toute vibration des aubes, pendant une phase d'acquisition des paramètres puis comparés automatiquement au cours de la mesure.

Il est important de noter, qu'au niveau du circuit 601, sont disponibles les signaux temporels Δt bruts, lesquels pourront permettre de réaliser un traitement différé, par exemple statistique, des différentes mesures.

Revenons à la figure 2 où il peut être observé les différents marquages mis en oeuvre dans l'invention.

Le marquage de référence 101 est de préférence constitué de trois marques radiales équidistantes réalisées sur le moyeu de la roue de la turbine sensiblement au pied des aubes. Toutefois, ce marquage n'est pas obligatoire et il est possible de n'effectuer qu'une seule marque sur le moyeu, le détecteur 100 étant alors constitué de trois capteurs placés côte à côte de façon équidistante. Dans l'un ou l'autre cas, le premier système de mesure 10 délivrera trois signaux de référence correspondant au passage soit de chaque marque devant un capteur unique soit d'une seule marque devant trois capteurs distincts.

Le marquage de mesure de la vibration tangentielle 201 est avantageusement constitué d'une marque unique

5

placée radialement sur le flanc de l'aube. Toutefois, ici encore, cette présentation n'est pas la seule possible. Cette marque peut, par exemple, être constituée simplement par le bord de l'aube. De même, comme précédemment, il peut être réalisé trois marques radiales équidistantes. Le deuxième détecteur 200 placé en avant des aubes comprendra alors un capteur unique et non trois comme représenté.

Quelle que soit la configuration adoptée, le deuxième système de mesure 20 délivrera trois signaux de mesure correspondant au passage soit de la marque unique ou d'un bord de l'aube devant trois capteurs distincts soit de trois marques devant un capteur unique.

Il doit être noté que les angles entre les marques de référence et les capteurs de mesure doivent être identiques.

Le marquage de mesure des vibrations transversales et de torsion 301,401 ressort du même principe et ne sera donc pas détaillé. Il peut simplement être noté que ce marquage est effectué sur le dessus de l'aube et non sur le flanc, et que pour des raisons de dimensionnement l'option trois marques, parallèles à l'axe de la roue (mode de torsion) ou inclinées par rapport à cet axe (mode transversal) et un capteur unique disposé radialement est préférable, sans toutefois exclure, dans certains cas particuliers, les deux autres options (capteurs multiples ou bord d'aube) éventuellement possibles.

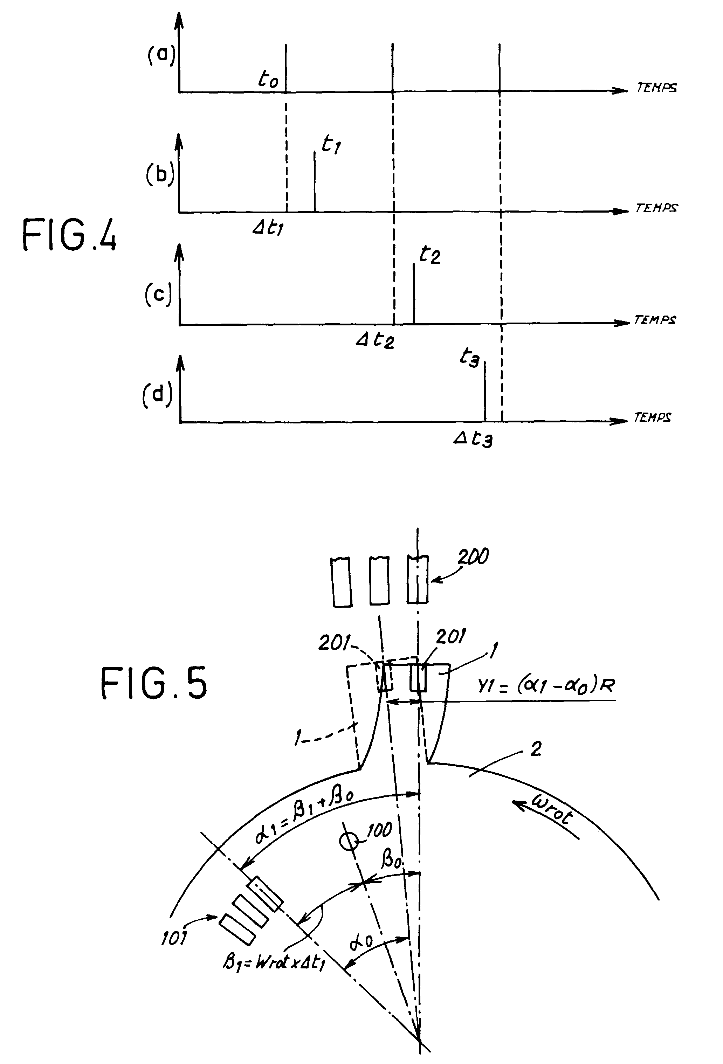

La figure 4 montre les différents signaux délivrés au niveau du module d'acquisition 50 pour un mode de vibration donné, par exemple le mode de vibration tangentiel. En a) sont montrés les signaux relevés par le premier système de mesure 10, en b), c) et d) les signaux relevés au niveau de chaque capteur du deuxième système de mesure 20.

Lorsqu'il n'y a pas de vibration, les instants d'apparition des signaux de référence coïncident avec ceux des signaux de mesure. Mais en présence d'une vibration (tangentielle pour l'exemple analysé), les aubes ne sont plus normales au moyeu et il existe alors un déphasage entre la détection des références sur le moyeu par le premier système de mesure 10 et la détection des marques sur le flanc de l'aube par le deuxième système de mesure 20. Ce déphasage est matérialisé par trois décalages temporels $\Delta t_1$, $\Delta t_2$, $\Delta t_3$ déterminés par rapport à l'instant d'apparition du signal de référence correspondant.

La figure 5 est un schéma explicatif de la détermination du déplacement de l'aube dans le mode de vibration tangentiel à partir de la connaissance des instants de passage des marques devant les capteurs (le principe de cette détermination est analogue pour les deux autres modes).

L'aube 1 est représentée à la fois au repos (en pointillés) et en vibration. Le capteur de référence 100 est fixe et unique, et disposé parallèlement à l'axe de la roue, en avant du moyeu. Le marquage de référence 101 est constitué de trois marques équidistantes réalisées sur le moyeu 2. Le système de mesure 20 de la vibration tangentielle est constitué par une marque unique 201 réalisée sur le flanc de l'aube et trois capteurs fixes 200 disposés en avant des aubes parallèlement à l'axe de la roue et sur un arc de cercle ayant pour centre cet axe. Les angles entre les trois marques de référence et les trois capteurs de mesure sont identiques. On notera deux constantes caractéristiques, l'une $\alpha_o$ liée au moyeu et représentant l'angle entre marques et l'autre $\beta_o$ liée au carter sur lequel sont montés les capteurs et correspondant à l'angle entre capteurs. On supposera que la roue tourne à une vitesse déterminée constante $\omega_{rot}$ pendant toute la mesure.

A l'instant $t_o$, la première marque sur le moyeu 2 est passée devant le capteur de référence 100, mais du fait de la vibration de l'aube le premier capteur de mesure ne détecte le passage de la marque sur le flanc de l'aube qu'à un instant plus tard $t_1$. Soit $\Delta t_1$, le décalage entre $t_o$ et $t_1$ on peut écrire :

$$y_1 = R\ \omega_{rot}\ \Delta t_1 + R\ (\beta o - \alpha o)$$

avec R la position radiale des capteurs fixes de mesure 200 par rapport à l'axe de rotation de la roue.

Pour simplifier les calculs on pourrait chercher à rendre $\alpha o$ et $\beta o$ identiques, mais en pratique ces valeurs seront introduites comme valeurs de calage, leur détermination étant le fait du module de recalage 601 évoqué précédemment.

La détermination de trois décalages temporels $\Delta t_1$, $\Delta t_2$, $\Delta t_3$ permettra d'obtenir trois valeurs $y_1$, $y_2$, $y_3$ du déplacement de l'aube aux instants $t_1$, $t_2$, $t_3$ (dans le mode de vibration considéré) et donc de calculer les paramètres de la vibration de l'aube par application de l'équation simplifiée définie précédemment soit :

$$y = Ay\ _{cos}\ (\ \omega_y t + \varphi_y)$$

de laquelle, on en déduit simplement :

$$\omega_{(Ay)} = \frac{\text{arcos } Y_1/A_y - \text{arcos } Y_2/A_y}{t_1 - t_2}$$

$$\varphi_{(Ay)} = \text{arcos } (\frac{y_3}{A_Y}) - \omega t_3$$

système dont la résolution numérique est particulièrement simple et connue en soi. Il est essentiel de noter que l'ensemble de ces calculs est réalisé instantanément, en temps réel, sans autre mémorisation que celle des décalages temporels pendant le temps de calcul des paramètres caractéristiques de la vibration.

Cette détermination en temps réel de l'amplitude, la fréquence et la phase de la vibration n'interdit pas une analyse en différé des résultats, lesquels permettront d'obtenir le spectre de la vibration. Pour cela, on mesure la période moyenne de rotation $\Delta T$ d'une aube sur n tours et connaissant cette période moyenne, on va mesurer les variations $\Delta ti$ correspondant aux oscillations de l'aube. En effectuant une statistique sur un nombre de tours élevé, plusieurs centaines par exemple, et une analyse de Fourier on obtient le spectre de vibration de l'aube, c'est-à-dire non seulement la fréquence fondamentale de la vibration mais également ses harmoniques qui, toutefois, seront d'assez faible amplitude.

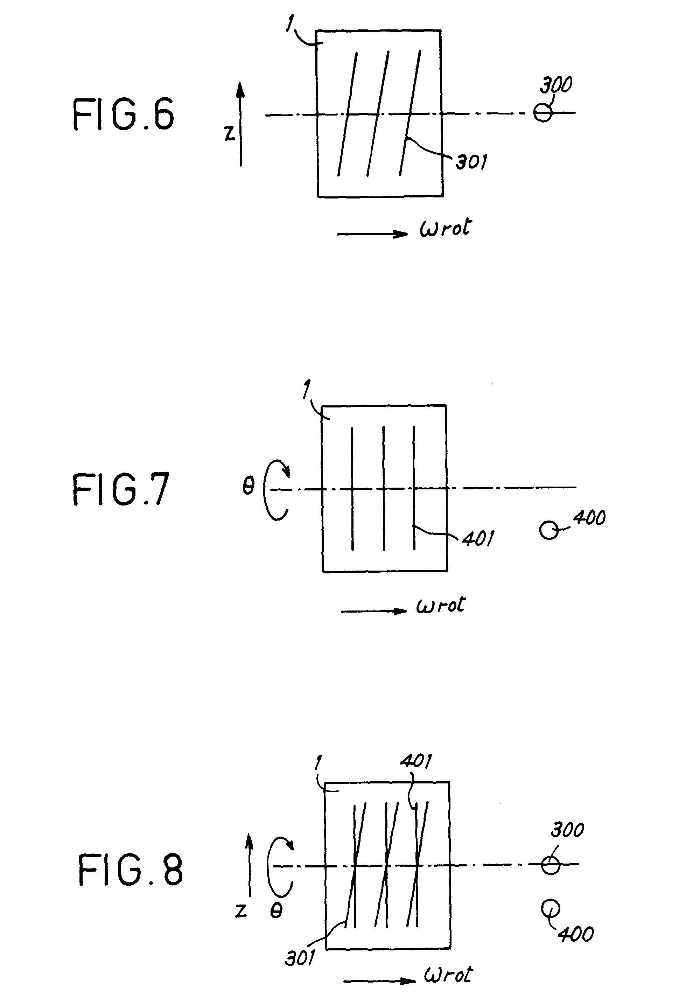

Les figures 6 et 7 montrent les dispositions préférables des capteurs et des marquages réalisés sur le dessus de l'aube pour la mesure supplémentaire des vibrations en mode transversal et en mode de flexion.

Dans le mode de vibration transversal, trois marques parallèles 301 sont disposées obliquement par rapport à l'axe de la roue et le capteur radial unique 300 est placé dans le plan axial de l'aube (correspondant au plan médian de la roue), cette disposition permettant une détermination du sens du déplacement transversal.

Dans le mode de vibration de torsion, trois marques parallèles 401 sont disposées parallèlement à l'axe de la roue et le capteur radial unique 400 est placé à une distance r de l'axe de l'aube déterminée et évidemment inférieure à une demi-largeur d'aube.

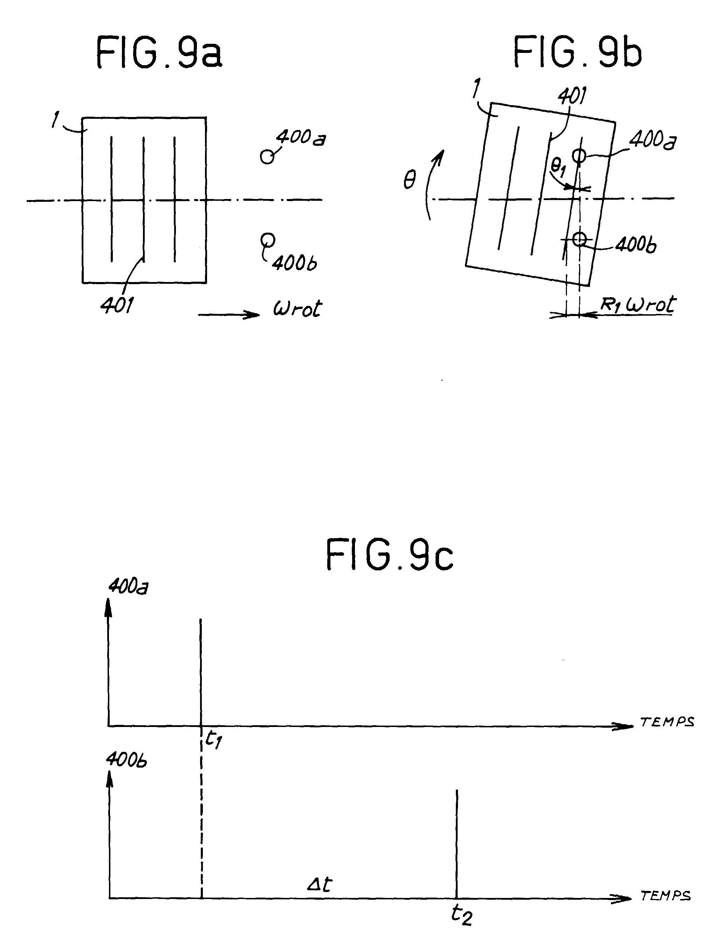

La figure 8 montre le marquage adopté sur le dessus d'aube pour la mesure de l'ensemble des vibrations transversale et de torsion. Cette disposition combine les deux précédentes avec des marques obliques 301 et des marques 401 perpendiculaires au sens de rotation, les capteurs étant l'un placé sur l'axe de l'aube, l'autre légèrement désaxé de la distance r.

Avec cette configuration pour les modes transversal et de torsion, le dispositif selon l'invention délivre quinze signaux de mesure définis par rapport aux trois signaux de référence, établissant quinze décalages temporels qui permettent de résoudre le système d'équations générales précitées, lequel ne comporte qu'au plus 11 inconnues, auquel sont soumis les paramètres des vibrations.

Ce nombre important de mesures de décalages peut d'ailleurs être réduit en adoptant des configurations différentes pour le système de mesure des modes transversal et de torsion, comme il va être montré en regard des figures 9 à 11.

Les figures 9a à 9c montrent un second exemple de réalisation du quatrième système de mesure 40 pour la détermination des vibrations de torsion.

Celui-ci comporte comme précédemment un marquage 401 constitué de trois marques parallèles disposées parallèlement à l'axe de la roue, mais le détecteur 400 est maintenant formé par deux capteurs radiaux 400a et 400b disposés de part et d'autre de l'axe de l'aube 1 et séparés par une distance déterminée d.

Lorsqu'il n'y a pas de torsion (figure 9a), le couple de capteurs 400a, 400b détecte simultanément les marques successives, et les instants d'apparition de ces marques sont confondus. Par contre, lorsqu'il y a torsion (figure 9b), les marques ne passent plus au même instant devant les deux capteurs.

Ainsi, par exemple, sur la figure 9c, on peut observer que c'est le capteur 400a qui détecte en premier, à $t_1$, le passage de la première marque, le capteur 400b ne réalisant cette détection qu'à l'instant $t_2$. Soit $\theta_1$ l'angle de torsion moyen, il vient :

$$\text{tg}\theta_1 = \frac{R_1 \omega_{rot}(t_1 - t_2)}{d}$$

avec $R_1$ la distance du dessus d'aube à l'axe de la roue et $\omega_{rot}$ la vitesse de rotation angulaire de la roue.

soit

$$\theta_1 = \text{Arctg}\frac{R_1 \omega_{rot}}{d} \Delta t$$

$\Delta t$ étant le décalage temporel entre le passage d'une même marque devant les deux capteurs.

Avec trois marques, on obtiendra trois mesures de l'angle de torsion $\theta_1$, $\theta_2$, $\theta_3$ suffisantes pour déterminer par une méthode numérique analogue à celle évoquée précédemment, les paramètres de la vibration de torsion.

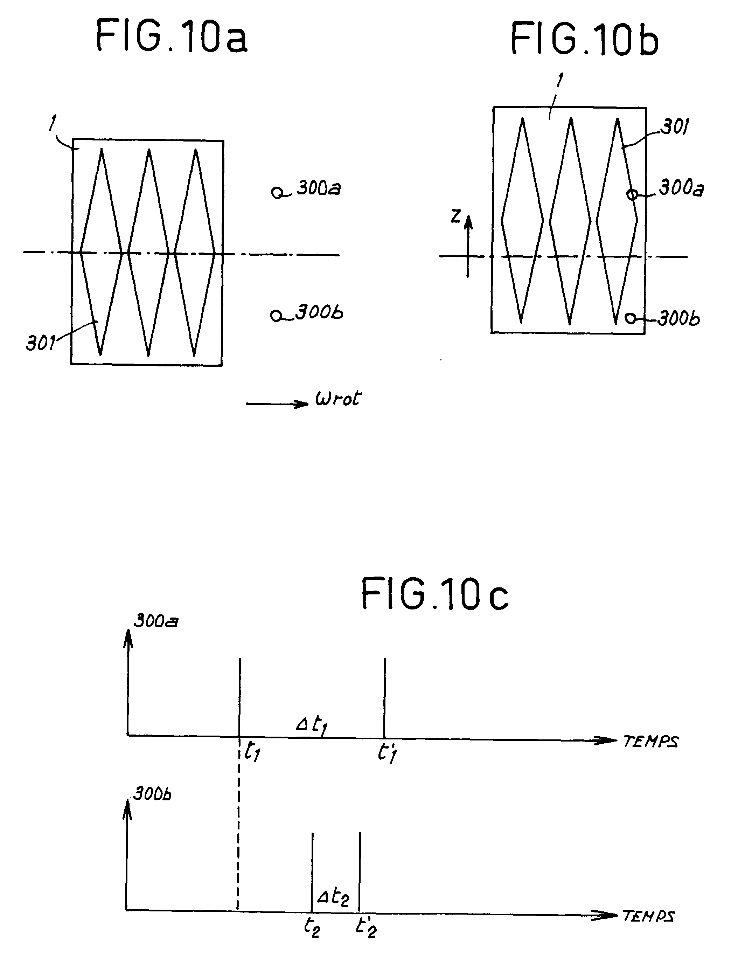

Les figures 10a à 10c montrent un second exemple de réalisation du troisième système de mesure 30 pour la détermination des vibrations en mode transversal.

Celui-ci comporte un détecteur 300 formé de deux capteurs radiaux 300a et 300b disposés de part et d'autre de l'axe de l'aube 1 et séparés par une distance déterminée d. On peut noter que cette disposition des capteurs est analogue au mode de réalisation précédent. Par contre, le marquage 301 est distinct et constitué de trois marques en forme de losange dont les diagonales de plus faible longueur sont placées sur l'axe de l'aube.

Lorsqu'il n'y a pas de flexion transversale de l'aube (figure 10a), les deux capteurs fournissent des signaux aux mêmes instants. Par contre, en cas de flexion transversale (figure 10b), les instants d'apparition de ces signaux au passage de la marque ne coïncident plus.

Ainsi, par exemple sur la figure 10c, il peut être observé la détection à l'instant $t_1$ par le capteur 300a d'un premier flanc de la première marque en forme de losange, un second flanc, de l'autre côté de l'axe, étant détecté par le second capteur 300b à l'instant t2. Puis aux instants $t'_2$ et $t'_1$ viennent les détections des côtés opposés du losange. Les décalages temporels $\Delta t_1 = t'_1 - t_1$ et $\Delta t_2 = t'_2 - t_2$ donnant l'épaisseur de la marque au niveau du passage des capteurs permettent de retrouver simplement le déplacement transversal de l'aube. Il peut être remarqué que ces marques pourraient aussi être constituées de trois losanges "pleins", les décalages temporels correspondant alors à une durée plus ou moins brêve du signal reçu par chaque capteur.

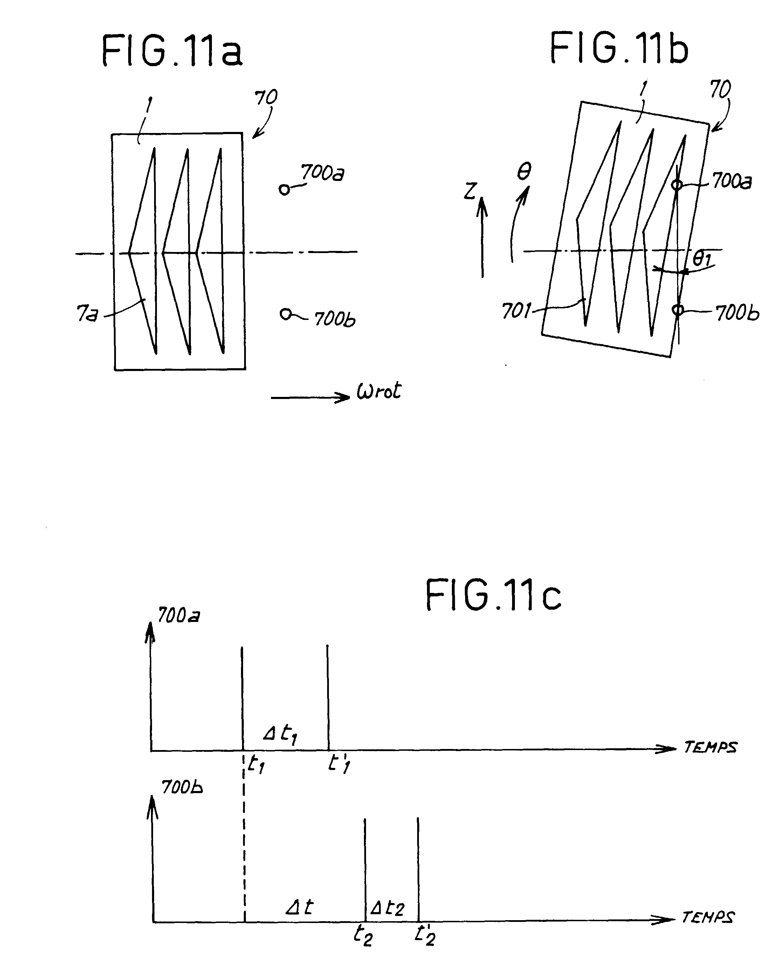

La figure 11 est un autre exemple de réalisation qui permet la combinaison des troisième et quatrième systèmes de mesure en un unique système de mesure 70 comportant deux capteurs radiaux 700a, 700b placés au dessus des aubes et assurant à la fois la détection de la vibration transversale et celle de la vibration de torsion, et un marquage 701 constitué de trois triangles isocèles dont les bases sont parallèles et disposées parallèlement à l'axe de la roue.

Lorsqu'aucune vibration n'est exercée sur l'aube (figure 11a), les instants de détection des débuts (bases des triangles) et fin de marques (côtés des triangles) sont identiques pour chaque capteur. Au contraire, l'apparition d'une vibration (figure 11b) provoque une non-coïncidence de ces instants d'apparition comme le montre la figure 11c. Les décalages temporels $\Delta t_1$ et $\Delta t_2$ permettront de définir la vibration transversale et le décalage temporel $\Delta t$ existant entre l'instant de détection des bases des triangles par les deux capteurs, permettra de définir la vibration de torsion.

En effet, les épaisseurs des marques triangulaires au niveau du passage des capteurs sont données par :

$$\Delta y_1 = R_1 \; \omega_{rot} \; \Delta t_1 \text{ et } \Delta y_2 = R1 \; \omega_{rot} \; \Delta t_2$$

Le déplacement de l'aube selon z, résultant de la seule vibration transversale, se calcule alors par l'expression :

$$z = \frac{\Delta y_2 - \Delta y_1}{2 tg \; \alpha}$$

où $\alpha$ est l'angle aigu des triangles.

Il est intéressant de noter qu'avec cette disposition particulière pour la mesure des vibrations transversale et de torsion, le nombre des signaux relevés pour la mesure de l'ensemble des vibrations est égal également à quinze (4 signaux par marques pour les vibrations transversales et de torsion et 3 signaux pour la vibration tangentielle), mais le nombre de décalages temporels utiles pour la détermination des paramètres vibration est réduit à douze.

Il peut aussi être remarqué que la mesure du déplacement de l'aube dans le mode de vibration transversal est dépendant de toute variation de la position axiale de la roue. Aussi, il est préférable de corriger les mesures pour tenir compte de cette perturbation. Cette correction est simplement réalisée par une détermination de l'amplitude des signaux de référence par rapport à une amplitude déterminée correspondant à une position médiane de la roue. Ce traitement peut être réalisé au niveau du module de recalage 601, par exemple.

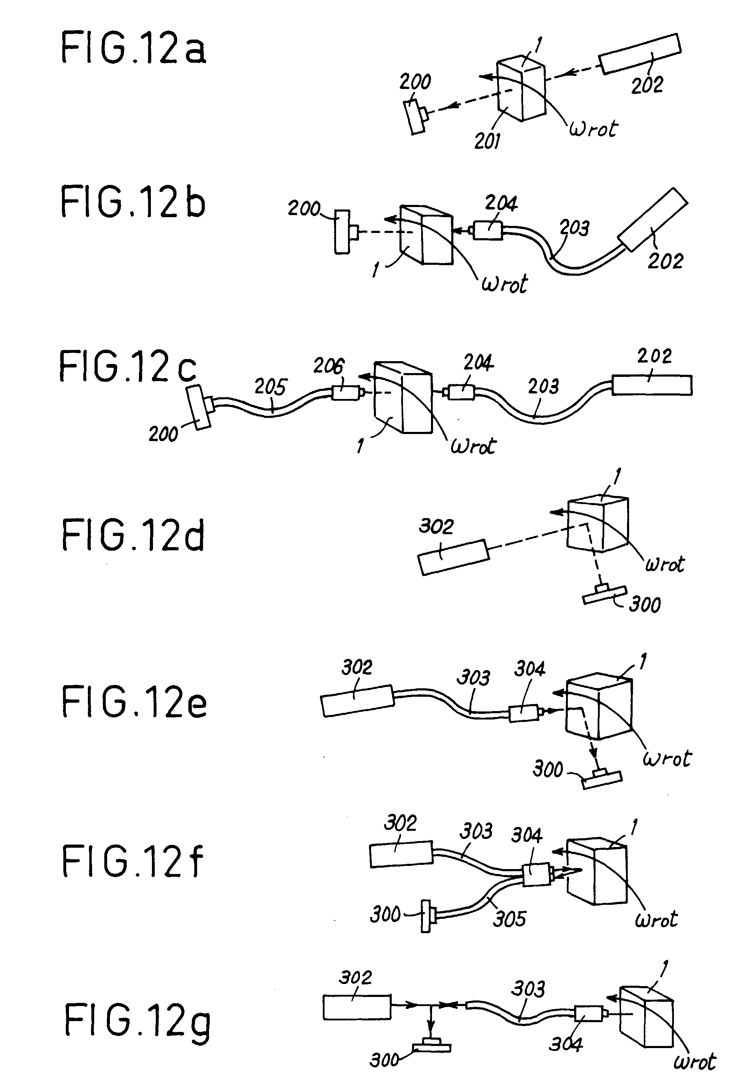

Les figures 12a à 12g représentent différents modes de réalisation des systèmes de mesure 10 à 40. Ceux-ci varient selon la manière dont le faisceau lumineux de mesure est créé ou transporté. Les sources lumineuses peuvent être de tous types, monochromatique ou large bande, et constituées par des sources laser ou des diodes électroluminescentes par exemple, à la seule condition qu'elles émettent continuement. Afin d'éviter des interférences éventuelles entre sources, il est avantageux d'utiliser des sources lumineuses de longueurs d'onde différentes associées de préférence à des détecteurs à bande étroite.

La figure 12a est une représentation schématique d'un système de mesure de la vibration tangentielle 10 dans lequel le marquage 201 est constitué par un bord de l'aube 1. La mesure est effectuée par l'occultation par l'aube d'un faisceau lumineux émis par une source 202 en direction du détecteur 200.

La figure 12b est une représentation schématique d'un autre système de mesure de la vibration tangentielle 10 dans lequel le marquage 201 est également constitué par un bord de l'aube mais dans lequel la source lumineuse 202 est déportée par une première fibre optique 203 jusqu'à une sonde 204 située à proximité de l'aube et faisant face au détecteur 200.

La figure 12c est une représentation schématique d'encore un autre système de mesure de vibration tangentielle 10 dans lequel le détecteur 200 comme la source 202 sont déportés par fibre optique. Une seconde sonde 206 est placée en bout de la seconde fibre optique 205 reliée au détecteur 200.

La figure 12d est une représentation schématique d'un système de mesure applicable à la détermination de l'une quelconque des vibrations dans lequel la mesure est effectuée par réflexion sur des marques dessinées sur l'aube, ces marques pouvant être réfléchissantes ou au contraire non réfléchissantes, et la source et le détecteur (par exemple 302 et 300) étant placés près de l'aube.

Dans la figure 12e la source lumineuse est déportée par une première fibre optique 303 aboutissant à une sonde 304 en regard de l'aube.

Dans la figure 12f, ce sont la source et le détecteur qui sont pareillement déportés par deux fibres optiques distinctes 303 et 305, la sonde 304 étant commune.

Enfin, la figure 12g montre schématiquement une utilisation d'une fibre optique unique qui véhicule les informations de la source 302 vers l'aube 1 et de l'aube 1 vers le détecteur 300, un séparateur de faisceau 307 permettant l'aiguillage de l'information vers l'élément concerné. Dans le cas de l'utilisation d'une fibre unique, une focalisaion du faisceau est possible par l'adjonction d'une lentille, non représentée, en avant de la fibre au plus près de l'aube.

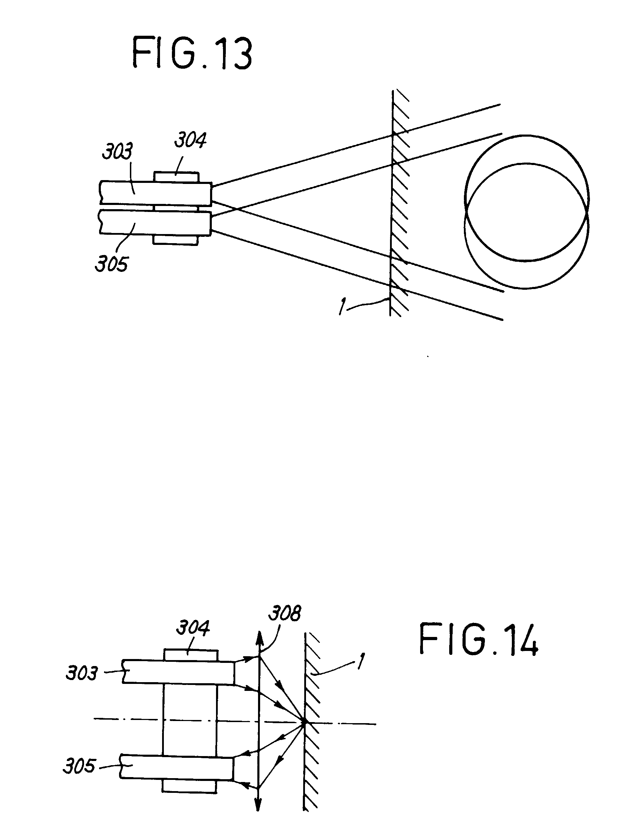

La figure 13 montre plus en détail l'impact du faisceau lumineux de la source et sa réflexion sur l'aube dans le mode de réalisation de la figure 12f.

La lumière issue de la fibre émettrice 303 est contenue dans un cône défini pour son ouverture numérique. Ceci engendre au niveau de l'objet illuminé, c'est-à-dire un flanc ou le dessus de l'aube 1, un éclairement sensiblement constant sur une zone circulaire dont le diamètre croît avec la distance fibre-aube.

La lumière reçue par l'aube est rétrodiffusée en direction de la fibre réceptrice 305 puis ensuite guidée par cette dernière vers le photodétecteur 300.

L'émetteur et le récepteur sont déportés dans le module optoélectronique d'alimentation et d'acquisition 501, 502, 503.

Il peut être noté, comme le montre la figure 14, qu'une lentille 308 peut être disposée en sortie des fibres émettrice 304 et réceptrice 305 afin de focaliser le faisceau lumineux en un point précis de l'aube.

Ces multiples dispositions des systèmes de mesure permettent d'assurer une très grande souplesse au dispositif selon l'invention qui peut être miniaturisé et ainsi permettre des mesures dans des conditions d'accessibilité difficile. L'utilisation de moyens optiques insensibilise le dispositif notamment aux variations électromagnétiques et permet des mesures quelle que soit température, très basse ou élevée, ou bien encore les variations de cette température.

Les calculs en temps réel des vibrations autorisent une réaction rapide et permettent d'éviter une détérioration de la turbine qu'amènerait une rupture d'une aube. Ces calculs sont réalisés sur chaque aube, l'ensemble des aubes d'une roue étant analysé soit en un seul tour de moyeu soit en un nombre de tours égal au nombre d'aubes, une aube nouvelle étant analysée dans chaque tour de roue.

Le dispositif de mesure optique de vibration selon l'invention présente une grande bande passante, et permet de détecter des vibrations ayant des fréquences de résonance comprises entre quelques dizaines de hertz et quelques centaines de kilohertz. Il est particulièrement adapté à la mesure de vibrations de turbines de petits et grands lanceurs de satellite et notamment il a pu être démontré une très grande précision de mesure, sur une turbopompe de lanceur de satellite comportant 108 aubes pour des fréquences de vibration comprises entre 600 et 64000 Hertz.

**Revendications**

1.  Procédé de mesure optique de vibrations, notamment d'aubes de turbine en rotation, ces aubes étant montées sur un moyeu (2) solidaire de l'arbre (3) d'une roue de turbine se déplaçant à une vitesse de rotation déterminée, ces aubes comportant chacune au moins un flanc disposé dans un plan parallèle au plan médian du moyeu et un dessus disposé dans un plan parallèle au plan tangent du moyeu, caractérisé en ce qu'il comporte les étapes suivantes :

    -   génération de trois signaux de référence à partir de la détection du passage d'un premier marquage (101), réalisé sur le moyeu (2) de la roue de turbine, par un premier détecteur optique (100),
    -   détection de trois signaux de mesure au passage d'un second marquage (201), réalisé sur le flanc de l'aube, devant un second détecteur optique (200),
    -   détermination des décalages temporels existant entre chacun des trois signaux de référence et chacun des trois signaux de mesure, ces décalages étant, en l'absence d'oscillations de l'aube, nuls ou égaux à des valeurs constantes déterminées, et
    -   calcul instantané des composantes de vibration tangentielle de l'aube en amplitude, fréquence et phase à partir des différents décalages relevés.

2.  Procédé de mesure optique de vibrations, notamment d'aubes de turbine en rotation, selon la revendication 1, caractérisé en ce qu'il comporte en outre les étapes suivantes :

    -   détection de trois autres signaux de mesure au passage d'au moins un autre marquage, (301, 401, 701) réalisé sur le dessus de l'aube, devant un autre détecteur optique (300,400, 700),
    -   détermination des décalages temporels existant entre chacun des trois signaux de référence et chacun des trois autres signaux de mesure, ces décalages étant, en l'absence d'oscillations de l'aube, nuls ou égaux à des valeurs constantes déterminées, et
    -   calcul instantané des composantes de vibration transversale et/ou de torsion de l'aube en amplitude, fréquence et phase à partir des différents décalages relevés.

3.  Procédé selon la revendication 1, caractérisé en ce que le second marquage (201) est réalisé sur le flanc de l'aube sous la forme de trois marques équidistantes disposées radialement, et le détecteur (200) est un capteur unique placé perpendiculairement au plan du moyeu en avant des aubes.

4.  Procédé selon la revendication 1, caractérisé en ce que le second marquage (201) consiste en un bord vertical de l'aube, le détecteur (200) étant alors constitué de trois capteurs équidistants disposés en avant des aubes perpendiculairement au plan du moyeu.

5.  Procédé selon la revendication 2, caractérisé en ce que pour déterminer les composantes de la vibration transversale, ledit autre marquage (301) réalisé sur le dessus de l'aube comporte trois marques parallèles disposées obliquement par rapport à l'axe de la roue, et le détecteur (300) est un capteur unique radial disposé dans le plan médian de la roue au dessus de l'aube.

6.  Procédé selon la revendication 2, caractérisé en ce que pour déterminer les composantes de la vibration transversale, ledit autre marquage (301) réalisé sur le dessus de l'aube comporte trois losanges dont les plus petites diagonales sont disposées dans le plan médian de la roue, et le détecteur (300) est constitué par deux capteurs (300a, 300b) séparés d'une distance déterminée et situés de part de d'autre du plan médian de la roue.

7.  Procédé selon la revendication 2, caractérisé en ce que pour déterminer les composantes de la vibration de torsion, ledit autre marquage (401) réalisé sur le dessus de l'aube comporte trois marques parallèles disposées parallèlement à l'axe de roue, et le détecteur (400) est un capteur unique radial situé à une distance déterminée du plan médian de la roue.

8.  Procédé selon la revendication 2, caractérisé en ce que pour déterminer les composantes de la vibration de torsion, ledit autre marquage (401) réalisé sur le dessus de l'aube comporte trois marques parallèles disposées parallèlement à l'axe de la roue, et le détecteur (400) est constitué par deux capteurs (400a, 400b) séparé d'une distance déterminée et situés de par et d'autre du plan médian de la roue.

9.  Procédé selon la revendication 2, caractérisé en ce que pour déterminer les composantes de la vibration de torsion, ledit autre marquage (401) réalisé sur le dessus de l'aube comporte une marque unique disposée sur le dessus de l'aube parallèlement à l'axe de la roue, et le détecteur (400) est alors constitué par trois capteurs radiaux équidistants situés dans un plan parallèle au plan médian de la roue à une distance déterminée de celui-ci.

10. Procédé selon la revendication 2, caractérisé en ce que pour déterminer simultanément les composantes des vibrations transversale et de torsion, ledit autre marquage (701) réalisé sur le dessus de l'aube comporte trois triangles isocèles dont les bases sont disposées parallèlement à l'axe de la roue, et le détecteur (700) est constitué par deux capteurs (700a,700b) séparés d'une distance déterminée et situés de part et d'autre du plan médian de la roue.

11. Procédé selon l'une quelconque des revendications 1 à 10, caractérisé en ce que la mesure instantanée des vibrations de l'aube est effectuée pour chaque aube de la turbine, l'ensemble des aubes étant analysées dans un tour de roue.

12. Procédé selon l'une quelconque des revendication 1 à 10, caractérisé en ce que la mesure instantanée des vibrations de l'aube est effectuée pour chaque aube de la turbine, une aube différente étant analysée à chaque tour de roue.

13. Procédé selon l'une quelconque des revendications 1 à 12, caractérisé en ce qu'il comprend en outre l'étape suivante :

   - détermination du spectre des différentes vibrations par une analyse de Fourier des valeurs instantanées des décalages temporels relevées sur un nombre déterminé de tours de roue.

14. Procédé selon l'une quelconque des revendications 1 à 13, caractérisé en ce qu'il comporte en outre l'étape suivante :

   - correction des erreurs de mesure sur la détermination de la vibration de l'aube, dues à un faible déplacement axial de l'arbre de la roue de turbine, par une évaluation de l'amplitude des signaux de référence par rapport à une amplitude déterminée correspondant à un positionnement nominal de cet arbre.

15. Dispositif de mesure optique de vibration, notamment d'aubes de turbine en rotation, ces aubes étant montées sur un moyeu (2) solidaire de l'arbre (3) d'une roue de turbine se déplaçant à une vitesse de rotation déterminée, ces aubes comportant chacune au moins un flanc disposé dans un plan parallèle au plan médian du moyeu, et un dessus disposé dans un plan parallèle au plan tangent du moyeu, caractérisé en ce qu'il comporte :

   - un premier système de mesure (10) pour la génération de trois signaux de référence à partir de la détection, par un premier détecteur (100), du passage d'un premier marquage (101) réalisé sur le moyeu de la roue de turbine,
   - un deuxième système de mesure (20) pour la détection de trois signaux de mesure au passage d'un second marquage (201), réalisé sur le flanc de l'aube, devant un second détecteur (200).

16. Dispositif selon la revendication 15, caractérisé en ce que ledit premier marquage (101) est constitué de trois marques équidistantes disposées radialement et ledit premier détecteur (100) est un capteur unique placé perpendiculairement au plan du moyeu en avant de celui-ci.

17. Dispositif selon la revendication 15, caractérisé en ce que ledit premier marquage (101) est constitué d'une marque unique radiale et ledit premier détecteur (100) est constitué par trois capteurs équidistants disposés perpendiculairement au plan du moyeu, selon un arc de cercle ayant pour centre l'axe de la roue.

18. Dispositif selon la revendication 15, caractérisé en ce que ledit second marquage (201) est constitué de trois marques équidistantes disposées radialement et ledit second détecteur (200) est un capteur unique placé perpendiculairement au plan du moyeu en avant des aubes.

19. Dispositif selon la revendication 15, caractérisé en ce que ledit second marquage (201) est constitué d'une marque unique radiale et ledit second détecteur (200) est constitué par trois capteurs équidistants disposés perpendiculairement au plan du moyeu, selon un arc de cercle ayant pour centre l'axe de la roue.

20. Dispositif selon la revendication 19, caractérisé en ce que ladite marque unique réalisée sur le flanc de l'aube est un bord vertical de ladite aube.

21. Dispositif selon la revendication 15, caractérisé en ce qu'il comporte en outre un troisième système de mesure (30) pour la détection de trois signaux de mesure au passage, devant un troisième détecteur (300), d'un troisième marquage (301) réalisé sur le dessus de l'aube.

22. Dispositif selon la revendication 21, caractérisé en ce que ledit troisième marquage (301) est constitué de trois marques parallèles disposées obliquement par rapport à l'axe de la roue et ledit troisième détecteur (300) est un capteur radial unique disposé dans le plan médian de la roue, au dessus de l'aube.

23. Dispositif selon la revendication 21, caractérisé en ce que ledit troisième marquage (301) est constitué de trois marques en forme de losanges dont les plus petites diagonales sont disposées dans le plan médian de la roue et ledit troisième détecteur est constitué de deux capteurs radiaux (300a, 300b) situés, au dessus de l'aube, de part et d'autre du plan médian de la roue et séparés d'une distance déterminée.

**24.** Dispositif selon la revendication 21, caractérisé en ce qu'il comporte en outre :

- un quatrième système de mesure (40) pour la détection de trois signaux de mesure au passage, devant un quatrième détecteur (400), d'un quatrième marquage (401) réalisé sur le dessus de l'aube.

**25.** Dispositif selon la revendication 24, caractérisé en ce que ledit quatrième marquage (401) est constitué de trois marques parallèles disposées parallèlement à l'axe de la roue et ledit quatrième détecteur (400) est un capteur radial unique disposé à une distance déterminée du plan médian de la roue, au dessus de l'aube.

**26.** Dispositif selon la revendication 24, caractérisé en ce que ledit quatrième marquage (401) est constitué de trois marques parallèles disposées parallèlement à l'axe de la roue et ledit quatrième détecteur est constitué de deux capteurs radiaux (400a, 400b) situés de part et d'autre du plan médian de la roue et séparés par une distance déterminée.

**27.** Dispositif selon la revendication 15 et la revendication 19, caractérisé en ce que lesdits troisième et quatrième systèmes de mesure (30, 40) forment un système unique de mesure (70) comportant un marquage (701) constitué de trois marques en forme de triangle isocèle dont les bases sont parallèles à l'axe de la roue et un détecteur est constitué de deux capteurs radiaux (700a, 700b) situés, au dessus de l'aube, de part et d'autre du plan médian de la roue et séparés par une distance déterminée.

**28.** Dispositif selon l'une quelconque des revendications 15 à 27, caractérisé en ce que la détection du passage d'un marquage (101, 201, 301, 401, 701) est réalisée par la réflexion d'un faisceau lumineux issu d'une source (102, 202, 302, 402, 702) dans le détecteur correspondant (100, 200, 300, 400, 700) à chacun de ces passages.

**29.** Dispositif selon l'une quelconque des revendications 15 à 27, caractérisé en ce que, dans le cadre du second système de mesure (20) la détection du passage du bord de l'aube est réalisée par l'occultation d'un faisceau lumineux issu d'une source (202) et éclairant normalement le détecteur correspondant (200).

**30.** Dispositif selon l'une quelconque des revendications 28 ou 29, caractérisé en ce que ledit détecteur est déporté du lieu de mesure au moyen d'une seconde fibre optique (105, 205, 305, 405, 705).

**31.** Dispositif selon la revendication 28, caractérisé en ce que ledit détecteur et ladite source sont déportés du lieu de mesure au moyen d'une fibre optique unique, un séparateur de faisceaux (107, 207, 307, 407, 707) assurant un aiguillage à l'émission et à la réception.

**32.** Dispositif selon l'une quelconque des revendications 28 à 31, caractérisé en ce qu'une lentille de focalisation (108, 208, 308, 408, 708) est disposée en sortie de la ou des fibres optiques pour limiter la dispersion du faisceau lumineux à l'espace défini par le marquage.

**33.** Dispositif selon l'une quelconque des revendications 15 à 32, caractérisé en ce qu'il comporte en outre :

- un module d'acquisition opto-électronique (50) qui transforme les signaux optiques fournis par les détecteurs (100, 200, 300, 400, 700) en signaux numériques, et
- un module de traitement de signal (60) qui, à partir de ces signaux numériques, calcule les paramètres des vibrations dans chaque mode.

**34.** Dispositif selon la revendication 33, caractérisé en ce que ledit module d'acquisition comporte des modules d'alimentation et de réception (501, 502, 503) pour générer le faisceau lumineux de mesure et recevoir le faisceau réfléchi ou transmis et des modules (510, 520, 530) de mise en forme des signaux électriques issus des signaux optiques.

**35.** Dispositif selon la revendication 33 ou la revendication 34, caractérisé en ce que ledit module de traitement de signal comporte un module (600) pour la détermination de la vitesse de rotation de la roue de turbine à partir des signaux de référence reçus par le module d'acquisition (50), un circuit de recalage temporel (601) pour prendre en compte les décalages initiaux existant au niveau des systèmes de mesure, et une unité de calcul en temps réel (602) qui à partir des décalages temporels mesurés, fournis par le module d'acquisition (50), et recalés, calcule les paramètres de la vibration que sont son amplitude, sa fréquence et sa phase dans chaque mode.

**Patentansprüche**

1. Verfahren zur optischen Schwingungsmessung, insbesondere von rotierenden Turbinenschaufeln, wobei diese Schaufeln auf einer einstückig mit der Turbinenradwelle (3), die sich mit einer bestimmten Drehgeschwindigkeit bewegt, ausgeführten Nabe (2) montiert sind, und wobei jede dieser Schaufeln wenigstens eine zur Mittenebene der Nabe parallel angeordnete Flanke und ein zur Tangentenebene der Nabe parallel angeordnetes Oberteil aufweist, dadurch gekennzeichnet, daß es die folgernden Schritte aufweist:

   - Erzeugung von drei Referenzsignalen anhand der Durchgangserfassung einer ersten Markierung (101), die auf der Turbinenradnabe (2) ausgebildet ist, mittels eines ersten optischen Detektors (100),
   - Erfassung von drei Meßsignalen beim Durchgang einer zweiten Markierung (201), die auf der Flanke der Turbinenschaufel vor einem zweiten optischen Detektor (200) ausgeführt ist,
   - Bestimmung der Zeitdifferenzen, die zwischen jedem der drei Referenzsignale und jedem der drei Meßsignale herrschen, wobei diese Differenzen in Abwesenheit von Schwingungen der Turbinenschaufel null oder gleich bestimmten, konstanten Werten sind, und
   - sofortige Berechnung der Anteile der Tangentialschwingung der Turbinenschaufel in Amplitude, Frequenz und Phase anhand der verschiedenen erfaßten Differenzen.

2. Verfahren zur optischen Schwingungsmessung, insbesondere von rotierenden Turbinenschaufeln, nach Anspruch 1, dadurch gekennzeichnet, daß es außerdem die folgenden Schritte aufweist:

   - Erfassung von drei weiteren Meßsignalen beim Durchgang von wenigstens einer weiteren Markierung (301, 401, 701), die auf dem Oberteil der Turbinenschaufel ausgeführt ist, vor einem weiteren optischen Detektor (300, 400, 700),
   - Bestimmung der Zeitdifferenzen, die zwischen jedem der drei Referenzsignale und jedem der drei weiteren Meßsignale herrschen, wobei diese Differenz in Abwesenheit von Schwingungen der Turbinenschaufel null oder gleich bestimmten, konstanten Werten sind, und
   - sofortige Berechnung der Anteile der Quer- und/oder der Torsionsschwingung der Turbinenschaufel in Amplitude, Frequenz und Phase anhand der verschiedenen erfaßten Differenzen.

3. Verfahren nach Anspruch 1, dadurch gekennzeichnet, daß die zweite Markierung (201) auf der Flanke der Turbinenschaufel in Form von drei gleichbeabstandeten, radial angeordneten Marken ausgeführt ist, und der Detektor (200) ein einzelner Aufnehmer ist, der senkrecht zur Nabenebene und vor den Turbinenschaufeln angeordnet ist.

4. Verfahren nach Anspruch 1, dadurch gekennzeichnet, daß die zweite Markierung (201) in einer senkrechte Kante der Turbinenschaufel besteht, wobei dann der Detektor (200) von drei gleichbeabstandeten Aufnehmern gebildet wird, die vor den Turbinenschaufeln senkrecht zur Nabenebene angeordnet sind.

5. Verfahren nach Anspruch 2, dadurch gekennzeichnet, daß zur Bestimmung der Anteile der Querschwingung die weitere Markierung (301), die auf dem Oberteil der Turbinenschaufel ausgebildet ist, drei parallele Marken aufweist, die schräg zur Radachse angeordnet sind, und der Detektor (300) ein einzelner radialer Aufnehmer ist, der in der Radmittenebene oberhalb der Turbinenschaufel angeordnet ist.

6. Verfahren nach Anspruch 2, dadurch gekennzeichnet, daß zur Bestimmung der Anteile der Querschwingung die weitere Markierung (301), die auf dem Oberteil der Turbinenschaufel ausgeführt ist, drei Rauten aufweist, deren kleinste Diagonalen in der Radmittenebene angeordnet sind, und der Detektor (300) von zwei Aufnehmern (300a, 300b) gebildet wird, die durch einen bestimmten Abstand getrennt beiderseits der Radmittenebene angeordnet sind.

7. Verfahren nach Anspruch 2, dadurch gekennzeichnet, daß zur Bestimmung der Anteile der Torsionsschwingung die weitere Markierung (401), die auf dem Oberteil der Turbinenschaufel ausgebildet ist, drei parallele Marken aufweist, die parallel zur Radachse angeordnet sind, und der Detektor (400) ein einzelner radialer Aufnehmer ist, der in einer bestimmten Entfernung zur Radmittenebene angeordnet ist.

8. Verfahren nach Anspruch 2, dadurch gekennzeichnet, daß zur Bestimmung der Anteile der Torsionsschwingung die weitere Markierung (401), die auf dem Oberteil der Turbinenschaufel ausgeführt ist, drei parallele Marken aufweist, die parallel zur Radachse angeordnet sind, und der Detektor (400) von zwei Aufnehmern (400a, 400b) gebildet wird, die durch einen bestimmten Abstand getrennt und beiderseits der Radmittenebene angeordnet sind.

9. Verfahren nach Anspruch 2, dadurch gekennzeichnet, daß zur Bestimmung der Anteile der Torsionsschwingung die weitere Markierung (401), die auf dem Oberteil der Turbinenschaufel ausgebildet ist, eine einzelne Marke aufweist, die auf dem Oberteil der Turbinenschaufel parallel zur Radachse angeordnet ist, und der Detektor (400) dann von drei radialen gleichbeabstandeten Aufnehmern gebildet wird, die parallel zur Radmittenebene mit einem bestimmten Abstand zu dieser angeordnet sind.

10. Verfahren nach Anspruch 2, dadurch gekennzeichnet, daß zur gleichzeitigen Bestimmung der Anteile der Quer- und der Torsionsschwingungen die weitere Markierung (701), die auf dem Oberteil der Turbinenschaufel ausgebildet ist, drei gleichschenklige Dreiecke aufweist, deren Grundlinien parallel zur Radachse angeordnet sind, und der Detektor (700) von zwei Aufnehmern (700a, 700b) gebildet wird, die durch einen bestimmten Abstand getrennt und beiderseits der Radmittenebene angeordnet sind.

11. Verfahren nach einem der Ansprüche 1 bis 10, dadurch gekennzeichnet, daß die sofortige Schwingungsmessung der Turbinenschaufel für jede Schaufel der Turbine durchgeführt wird, wobei die Gesamtheit der Turbinenschaufeln innerhalb einer Radumdrehung analysiert wird.

12. Verfahren nach einem der Ansprüche 1 bis 10, dadurch gekennzeichnet, daß die sofortige Schwingungsmessung der Turbinenschaufel für jede Schaufel der Turbine durchgeführt wird, wobei bei jeder Radumdrehung eine verschiedene Turbinenschaufel analysiert wird.

13. Verfahren nach einem der Ansprüche 1 bis 12, dadurch gekennzeichnet, daß es außerdem den folgenden Schritt aufweist:

   - Spektrumsbestimmung der verschiedenen Schwingungen durch Fourieranalyse der Momentanzeitdifferenzwerte, die bei einer bestimmten Anzahl von Radumdrehungen erfaßt werden.

14. Verfahren nach einem der Ansprüche 1 bis 13, dadurch gekennzeichnet, daß es außerdem den folgenden Schritt aufweist:

   - Korrektur der Meßfehler bei der Bestimmung der Turbinen-schaufelschwingung, aufgrund einer geringen axialen Abweichung der Turbinenradwelle, durch eine Bewertung der Referenzsignalamplitude in Bezug auf eine bestimmte, einer Nenneinstellung dieser Welle entsprechende Amplitude.

15. Vorrichtung zur optischen Schwingungsmessung, insbesondere von rotierenden Turbinenschaufeln, wobei diese Schaufeln auf einer einstückig mit der Turbinenradwelle (3), die sich mit einer bestimmten Drehgeschwindigkeit bewegt, ausgebildeten Nabe (2) montiert sind, und wobei jede dieser Schaufeln wenigstens eine zur Mittenebene der Nabe parallel angeordnete Flanke und ein zur Tangentenebene der Nabe parallel angeordnetes Oberteil aufweist, dadurch gekennzeichnet, daß sie folgendes aufweist:

   - ein erstes Meßsystem (10) zur Erzeugung von drei Referenzsignalen anhand der Durchgangserfassung mittels eines ersten Detektors (100) von einer ersten Markierung (101), die auf der Turbinenradnabe ausgebildet ist,
   - ein zweites Meßsystem (20) zur Erfassung von drei Meßsignalen beim Durchgang einer zweiten Markierung (201), die auf der Flanke der Turbinenschaufel vor einem zweiten optischen Detektor (200) ausgebildet ist.

16. Vorrichtung nach Anspruch 15, dadurch gekennzeichnet, daß die erste Markierung (101) von drei gleichbeabstandeten, radial angeordneten Marken gebildet wird, und der erste Detektor (100) ein einzelner Aufnehmer ist, der senkrecht zur Nabenebene und vor dieser angeordnet ist.

17. Vorrichtung nach Anspruch 15, dadurch gekennzeichnet, daß die erste Markierung (101) von einer einzelnen radialen Marke gebildet wird, und der erste Detektor (100) von drei gleichbeabstandeten Aufnehmern gebildet wird, die senkrecht zur Nabenebene entlang eines Kreisbogens mit der Radachse als Mittelpunkt angeordnet sind.

18. Vorrichtung nach Anspruch 15, dadurch gekennzeichnet, daß die zweite Markierung (201) von drei gleichbeabstandeten, radial angeordneten Marken gebildet wird, und der zweite Detektor (200) ein einzelner Aufnehmer ist, der senkrecht zur Nabenebene und vor den Turbinenschaufeln angeordnet ist.

19. Vorrichtung nach Anspruch 15, dadurch gekennzeichnet, daß die zweite Markierung (201) von einer einzelnen radialen Marke gebildet wird, und der zweite Detektor (200) von drei gleichbeabstandeten Aufnehmern gebildet wird, die senkrecht zur Nabenebene entlang eines Kreisbogens mit der Radachse als Mittelpunkt angeordnet sind.

20. Vorrichtung nach Anspruch 19, dadurch gekennzeichnet, daß die einzelne, auf der Flanke der Turbinenschaufel ausgeführte Marke eine senkrechte Kante dieser Turbinenschaufel ist.

21. Vorrichtung nach Anspruch 15, dadurch gekennzeichnet, daß sie außerdem ein drittes Meßsystem (30) aufweist, zur Erfassung von drei Meßsignalen beim Durchgang einer dritten Markierung (301), die auf dem Oberteil der Turbinenschaufel ausgebildet ist, vor einem dritten Detektor (300).

22. Vorrichtung nach Anspruch 21, dadurch gekennzeichnet, daß die dritte Markierung (301) von drei parallelen Marken gebildet wird, die schräg zur Radachse angeordnet sind, und der dritte Detektor (300) ein radialer einzelner Aufnehmer ist, der in der Radmittenebene über der Turbinenschaufel angeordnet ist.

23. Vorrichtung nach Anspruch 21, dadurch gekennzeichnet, daß die dritte Markierung (301) von drei rautenförmigen Marken gebildet wird, deren kleinste Diagonalen in der Radmittenebene angeordnet sind, und der dritte Detektor von zwei radialen Aufnehmern (300a, 300b) gebildet wird, die über der Turbinenschaufel beiderseits der Radmittenebene und durch einen bestimmten Abstand getrennt angeordnet sind.

24. Vorrichtung nach Anspruch 21, dadurch gekennzeichnet, daß sie außerdem aufweist:

- ein viertes Meßsystem (40) zur Erfassung von drei Meßsignalen beim Durchgang einer vierten Markierung (401), die auf dem Oberteil der Turbinenschaufel vor einem vierten Detektor (400) ausgebildet ist.

25. Vorrichtung nach Anspruch 24, dadurch gekennzeichnet, daß die vierte Markierung (401) von drei parallelen Marken gebildet wird, die parallel zur Radachse angeordnet sind, und der vierte Detektor (400) ein radialer, einzelner Aufnehmer ist, der in einer bestimmten Entfernung zur Radmittenebene über der Turbinenschaufel angeordnet ist.

26. Vorrichtung nach Anspruch 24, dadurch gekennzeichnet, daß die vierte Markierung (401) von drei parallelen Marken gebildet wird, die parallel zur Radachse angeordnet sind, und der vierte Detektor von zwei radialen Aufnehmern (400a, 400b) gebildet wird, die beiderseits der Radmittenebene durch einen bestimmten Abstand getrennt angeordnet sind.

27. Vorrichtung nach den Ansprüchen 15 und 19, dadurch gekennzeichnet, daß das dritte und vierte Meßsystem (30, 40) ein einziges Meßsystem (70) bilden, das eine Markierung (701), die von drei Marken in Form von gleichschenkligen Dreiecken, deren Grundlinien parallel zur Radachse sind, gebildet wird, und einen Detektor aufweist, der von zwei radialen Aufnehmern (700a, 700b) gebildet wird, die über der Turbinenschaufel beiderseits der Radmittenebene durch einen bestimmten Abstand getrennt angeordnet sind.

28. Vorrichtung nach einem der Ansprüche 15 bis 27, dadurch gekennzeichnet, daß die Durchgangserfassung einer Markierung (101, 201, 301, 401, 701) durch die Reflexion eines von einer Quelle (102, 202, 302, 402, 702) im entsprechenden Detektor (100, 200, 300, 400, 700) abgeleiteten Lichtstrahls bei jedem dieser Durchgänge durchgeführt wird.

29. Vorrichtung nach einem der Ansprüche 15 bis 27, dadurch gekennzeichnet, daß im Rahmen des zweiten Meßsystems (20) die Durchgangserfassung der Turbinenschaufelkante durch die Verdeckung von einem von einer Quelle (202) abgeleiteten und normalerweise den entsprechenden Detektor (200) beleuchtenden Lichtstrahl durchgeführt wird.

30. Vorrichtung nach einem der Ansprüche 28 oder 29, dadurch gekennzeichnet, daß der Detektor vom Meßort mittels einer zweiten optischen Faser (105, 205, 305, 405, 705) verschoben wird.

31. Vorrichtung nach Anspruch 28, dadurch gekennzeichnet, daß der Detektor und die Quelle vom Meßort mittels einer einzelnen optischen Faser verschoben werden, wobei ein Strahlteiler (107, 207, 307, 407, 707) die Verzweigung zur Ausstrahlung und zum Empfang sicherstellt.

32. Vorrichtung nach einem der Ansprüche 28 bis 31, dadurch gekennzeichnet, daß eine Fokussierungslinse (108, 208, 308, 408, 708) am Austritt der optischen Faser oder Fasern vorgesehen ist, um die Dispersion des Lichtstrahls auf den von der Markierung abgegrenzten Bereich zu beschränken.

33. Vorrichtung nach einem der Ansprüche 15 bis 32, dadurch gekennzeichnet, daß sie außerdem aufweist:

- ein opto-elektronisches Erfassungsmodul (50), das die von den Detektoren (100, 200, 300, 400, 700) gelieferten optischen Signale in numerische Signale umwandelt, und
- ein Signalverarbeitungsmodul (60), das anhand dieser numerischen Signale die Schwingungsparameter in jedem Modus berechnet.

34. Vorrichtung nach Anspruch 33, dadurch gekennzeichnet, daß das Erfassungsmodul Zuführungs- und Empfangsmodule (501, 502, 503), um das Meßlichtstrahlbündel zu erzeugen und das reflektierte oder durchgelassene Strahlbündel zu empfangen, und Module (510, 520, 530) zur Formung der von den optischen Signalen abgeleiteten elektrischen Signale aufweist.

35. Vorrichtung nach Anspruch 33 oder 34, dadurch gekennzeichnet, daß das Signalverarbeitungsmodul ein Modul (600) zur Drehgeschwindigkeitsbestimmung des Turbinenrades anhand der vom Erfassungsmodul (50) empfangenen Referenzsignale, eine Schaltung (601) zur zeitlichen Rejustierung, um die beim Meßsystem herrschenden Anfangsabweichungen zu berücksichtigen, und eine Echtzeitrecheneinheit (602) aufweist, die anhand der gemessenen und rejustierten Zeitdifferenzen, die vom Erfassungsmodul (50) zur Verfügung gestellt werden, die Parameter der Schwingung, die ihre Amplitude, ihre Frequenz und ihre Phase sind, in jedem Modus berechnet.

## Claims

1. Process for optical measurement of vibrations, especially of rotating turbine blades, these blades being mounted on a hub (2) integral with the shaft (3) of a turbine wheel moving with a determined speed of rotation, each one of said blades comprising at least one flank disposed in a plane parallel to the midplane of the hub and a topside disposed in a plane parallel to the tangent plane of the hub, characterized in that it includes the following steps:

   - generation of three reference signals from detection of the passing of a first marking (101), made on the hub (2) of the turbine wheel, through a first optical detector (100),
   - detection of three measurement signals on the passing of a second marking (201), made on the flank of the blade, in front of a second optical detector (200),
   - determination of the time offsets existing between each of the three reference signals and each of the three measurement signals, these offsets being, in the absence of oscillations of the blade, zero or equal to determined constant values, and
   - instantaneous calculation of the amplitude, frequency and phase components of blade tangential vibration from the various offsets recorded.

2. Process for optical measurement of vibrations, especially of rotating turbine blades, according to claim 1, characterized in that it further comprises the following steps:

   - detection of three other measurement signals on the passing of at least another marking (301, 401, 701) made on the topside of the blade, in front of another optical detector (300, 400, 700),
   - determination of the time offsets existing between each of the three reference signals and each of the three other measurement signals, these offsets being, in the absence of oscillations of the blade, zero or equal to determined constant values, and
   - instantaneous calculation of the amplitude, frequency and phase components of blade transverse and/or torsional vibration from the various offsets recorded.

3. Process according to Claim 1, characterized in that the second marking (201) is made on the flank of the blade in the form of three radially disposed equidistant marks, and the detector (200) is a single sensor placed perpendicularly to the plane of the hub ahead of the blades.

4. Process according to Claim 1, characterized in that the second marking (201) consists of a vertical edge of the blade, the detector (200) then consisting of three equidistant sensors disposed ahead of the blades perpendicularly to the plane of the hub.

**5.** Process according to Claim 2, characterized in that, in order to determine the components of the transverse vibration, the said other marking (301) made on the topside of the blade comprises three parallel marks disposed obliquely with respect to the axis of the wheel, and the detector (300) is a single radial sensor disposed in the midplane of the wheel on top of the blade.

**6.** Process according to Claim 2, characterized in that, in order to determine the components of the transverse vibration, the said other marking (301) made on the topside of the blade comprises three diamonds whose smallest diagonals are disposed in the midplane of the wheel, and the detector (300) consists of two sensors (300a, 300b) separated by a determined distance and situated on either side of the midplane of the wheel.

**7.** Process according to Claim 2, characterized in that, in order to determine the components of the torsional vibration, the said other marking (401) made on the topside of the blade comprises three parallel marks disposed parallel to the axis of the wheel, and the detector (400) is a single radial sensor situated at a determined distance from the midplane of the wheel.

**8.** Process according to claim 2, characterized in that, in order to determine the components of the torsional vibration, the said other marking (401) made on the topside of the blade comprises three parallel marks disposed parallel to the axis of the wheel, and the detector (400) consists of two sensors (400a, 400b) separated by a determined distance and situated on either side of the midplane of the wheel.

**9.** Process according to Claim 2, characterized in that, in order to determine the components of the torsional vibration, the said other marking (401) made on the topside of the blade consists of a single mark disposed on the topside of the blade parallel to the axis of the wheel, and the detector (400) then consists of three equidistant radial sensors situated in a plane parallel to the midplane of the wheel at a determined distance from the latter plane.

**10.** Process according to Claim 2, characterized in that, in order to determine simultaneously the components of the transverse and torsional vibrations, the said other marking (701) made on the topside of the blade comprises three isosceles triangles whose bases are disposed parallel to the axis of the wheel, and the detector (700) consists of two sensors (700a, 700b) separated by a determined distance and situated on either side of the midplane of the wheel.

**11.** Process according to any one of Claims 1 to 10, characterized in that the instantaneous measurement of the vibrations of the blade is performed for each blade of the turbine, all the blades being analyzed in one wheel revolution.

**12.** Process according to any one of Claims 1 to 10, characterized in that the instantaneous measurement of the vibrations of the blade is performed for each blade of the turbine, a different blade being analyzed with each wheel revolution.

**13.** Process according to any one of Claims 1 to 12, characterized in that it furthermore comprises the following step:

- determination of the spectrum of the various vibrations by Fourier analysis of the instantaneous values of the time offsets recorded over a determined number of wheel revolutions.

**14.** Process according to any one of Claims 1 to 13, characterized in that it furthermore includes the following step:

- corrections of the measurement errors in the determination of the vibration of the blade, which are due to a small axial displacement of the shaft of the turbine wheel, through an evaluation of the amplitude of the reference signals with respect to a determined amplitude corresponding to a nominal positioning of this shaft.

**15.** Device for optical measurement of vibrations, especially of rotating turbine blades, these blades being mounted on a hub (2) integral with the shaft (3) of a turbine wheel moving at a determined speed of rotation, each one of said blades comprising at least one flank disposed in a plane parallel to the midplane of the hub and a topside disposed in a plane parallel to the tangent plane of the hub, characterized in that it includes:

- a first measurement system (10) for the generation of three reference signals from the detection, by a first detector (100), of the passing of a first marking (101) made on the hub of the turbine wheel,
- a second measurement system (20) for the detection of three measurement signals on the passing of a second marking (201), made on the flank of the blade, in front of a second detector (200).

16. Device according to Claim 15, characterized in that the said first marking (101) consists of three equidistant marks disposed radially and the said first detector (100) is a single sensor placed perpendicularly to the plane of the hub ahead of the latter.

17. Device according to Claim 15, characterized in that the said first marking (101) consists of a single radial mark and the said first detector (100) consists of three equidistant sensors disposed perpendicularly to the plane of the hub, according to an arc of a circle having the axis of the wheel as centre.

18. Device according to Claim 15, characterized in that the said second marking (201) consists of three equidistant marks disposed radially and the said second detector (200) is a single sensor placed perpendicularly to the plane of the hub ahead of the blades.

19. Device according to Claim 15, characterized in that the said second marking (201) consists of a single radial mark and the said second detector (200) consists of three equidistant sensors disposed perpendicularly to the plane of the hub, according to an arc of a circle having the axis of the wheel as centre.

20. Device according to Claim 19, characterized in that the said single mark made on the flank of the blade is a vertical edge of the said blade.

21. Device according to Claim 15, characterized in that it furthermore includes a third measurement system (30) for the detection of three measurement signals with the passing, in front of a third detector (300), of a third marking (301) made on the topside of the blade.

22. Device according to Claim 21, characterized in that the said third marking (301) consists of three parallel marks disposed obliquely with respect to the axis of the wheel and the said third detector (300) is a single radial sensor disposed in the midplane of the wheel, on top of the blade.

23. Device according to Claim 21, characterized in that the said third marking (301) consists of three marks in the form of diamonds whose smallest diagonals are disposed in the midplane of the wheel and the said third detector consists of two radial sensors (300a, 300b) situated, on top of the blade, on either side of the midplane of the wheel and separated by a determined distance.

24. Device according to Claim 21, characterized in that it furthermore includes:

   - a fourth measurement system (40) for the detection of three measurement signals on the passing, in front of a fourth detector (400), of a fourth marking (401) made on the topside of the blade.

25. Device according to Claim 24, characterized in that the said fourth marking (401) consists of three parallel marks disposed parallel to the axis of the wheel and the said fourth detector (400) is a single radial sensor disposed at a determined distance from the midplane of the wheel, on top of the blade.

26. Device according to Claim 24, characterized in that the said fourth marking (401) consists of three parallel marks disposed parallel to the axis of the wheel and the said fourth detector consists of two radial sensors (400a, 400b) situated on either side of the midplane of the wheel and separated by a determined distance.

27. Device according to Claim 15 and Claim 19, characterized in that the said third and fourth measurement systems (30, 40) consist of a single measurement system (70) comprising a marking (701) consisting of three marks in the form of an isosceles triangle whose bases are parallel to the axis of the wheel and a detector consisting of two radial sensors (700a, 700b) situated, on top of the blade, on either side of the midplane of the wheel and separated by a determined distance.

28. Device according to any one of Claims 15 to 27, characterized in that the detection of the passing of a marking (101, 201, 301, 401, 701) is carried out by the reflection of a light beam arising from a source (102, 202, 302, 402, 702) in the corresponding detector (100, 200, 300, 400, 700) with each of these passings.

29. Device according to any one of Claims 15 to 27, characterized in that, in the context of the second measurement system (20) the detection of the passing of the edge of the blade is carried out by the occluding of a light beam arising from a source (202) and normally illuminating the corresponding detector (200).

30. Device according to any one of Claims 28 or 29, characterized in that the said detector is offset from the place of measurement by means of a second optical fibre (105, 205, 305, 405, 705).

31. Device according to Claim 28, characterized in that the said detector and the said source are offset from the place of measurement by means of a single optical fibre, a beam splitter (107, 207, 307, 407, 707) affording a switching on transmission and on reception.

32. Device according to any one of Claims 28 to 31, characterized in that a focusing lens (108, 208, 308, 408, 708) is disposed at the output of the optical fibre(s) in order to limit the dispersion of the light beam to the space defined by the marking.

33. Device according to any one of Claims 15 to 32, characterized in that it furthermore includes:

   - an opto-electronic acquisition module (50) which transforms the optical signals provided by the detectors (100, 200, 300, 400, 700) into digital signals, and
   - a signal processing module (60) which, from these digital signals, calculates the parameters of the vibrations in each mode.

34. Device according to Claim 33, characterized in that the said acquisition module includes feed and reception modules (501, 502, 503) for generating the measurement light beam and receiving the reflected or transmitted beam and modules (510, 520, 530) for shaping the electrical signals arising from the optical signals.

35. Device according to Claim 33 or Claim 34, characterized in that the said signal processing module includes a module (600) for determining the speed of rotation of the turbine wheel from the reference signals received by the acquisition module (50), a time resetting circuit (601) for taking into account the initial offsets existing at the level of the measurement systems, and a real-time calculating unit (602) which, from the measured time offsets provided by the acquisition module (50) and realigned, calculates the parameters of the vibration which are its amplitude, frequency and phase in each mode.

FIG.1

$A, \omega, \varphi$

FIG.2

# FIG. 3

SIGNAUX LUMINEUX DE RÉFÉRENCE

SOURCE DÉTECTEUR ALIMENTATION — 501

MISE EN FORME DU SIGNAL ÉLECTRIQUE DE RÉFÉRENCE — 510

SIGNAUX LUMINEUX 1ère FLEXION (selon Y)

SOURCES DÉTECTEURS ALIMENTATION — 502

MISE EN FORME DES SIGNAUX ÉLECTRIQUES DE MESURE 1ère FLEXION — 520

SIGNAUX LUMINEUX 2ᵉ FLEXION (selon Z) TORSION — 503

SOURCES DÉTECTEURS ALIMENTATION

MISE EN FORME DES SIGNAUX ÉLECTRIQUES DE MESURE 2ᵉᵐᵉ FLEXION — 530

50

60

CALCUL DE LA VITESSE DE ROTATION — 600

RECALAGE TEMPOREL AUTOMATIQUE DES SIGNAUX — 601

CALCULATEUR TEMPS RÉEL — 602

A
ω
φ

Δt

EP 0 586 288 B1

FIG.4

(a)

$t_0$

TEMPS

(b)

$t_1$

$\Delta t_1$

TEMPS

(c)

$t_2$

$\Delta t_2$

TEMPS

(d)

$t_3$

$\Delta t_3$

TEMPS

FIG.5

200

201

201

1

$Y_1 = (\alpha_1 - \alpha_0)R$

1

2

$\alpha_1 = \beta_1 + \beta_0$

Wrot

100

$\beta_0$

101

$\alpha_0$

$\beta_1 = Wrot \times \Delta t_1$

FIG.6

FIG.7

FIG.8

# FIG.9a

# FIG.9b

# FIG.9c

# FIG.10a

# FIG.10b

# FIG.10c

# FIG.11a

# FIG.11b

# FIG.11c

FIG.12a

FIG.12b

FIG.12c

FIG.12d

FIG.12e

FIG.12f

FIG.12g

# FIG.13

# FIG.14